# EUROPÄISCHE PATENTSCHRIFT

(11) **EP 2 144 729 B1**
(45) Veröffentlichungstag und Bekanntmachung des Hinweises auf die Patenterteilung: **25.04.2012**
(21) Anmeldenummer: 08759648.2
(22) Anmeldetag: 15.05.2008
(51) Int. Cl.: B23K 26/06, B23K 26/26, B23K 26/38, B23K 37/02, B23K 26/08, B23K 26/16, B23K 26/42, B23K 101/00, B23K 101/18

(54) **VORRICHTUNG UND VERFAHREN ZUM HERSTELLEN VON TAILORED BLANKS DURCH SCHNEIDEN UND SCHWEISSEN VON ZU FÜGENDEN BLECHEN**
DEVICE FOR AND METHOD OF PRODUCING TAILORED BLANKS BY CUTTING AND WELDING SHEETS TO BE JOINED
DISPOSITIF POUR ET METHODE DE PRODUCTION D'ÉBAUCHES SUR MESURE PAR DÉCOUPAGE ET SOUDAGE DE TÔLES À ASSEMBLER ENTRE ELLES

(30) Priorität: 15.05.2007 DE 102007023017
(43) Veröffentlichungstag der Anmeldung: 20.01.2010
(73) Patentinhaber: ThyssenKrupp Lasertechnik GmbH, 88212 Ravensburg (DE)
(72) Erfinder: ALBER, Gerhard, 88276 Berg (DE)
(74) Vertreter: Cohausz & Florack
(86) Internationale Anmeldenummer: PCT/EP2008/055995
(87) Internationale Veröffentlichungsnummer: WO 2008/138973

(56) Entgegenhaltungen:
- EP-A- 1 238 746
- JP-A- 5 285 688
- JP-A- 59 225 897
- JP-A- 60 121 089
- US-A- 4 650 954
- US-A1- 2005 021 170

## Beschreibung

Die Erfindung betrifft eine Vorrichtung und ein Verfahren zum Herstellen von Tailored Blanks gemäβ dem Oberbegriff der Ansprüche 1 und 7 (siche, z.B., JP 60/121089 A).

Bei bekannten Vorrichtung zum Herstellen von Tailored Blanks der vorgenannten Art (EP 0 522 811 B1) ist der Werkstückträger als zweiteiliger Tisch ausgebildet, dessen beide Teile die beiden im Stumpfstoß zu fügenden, zuvor an ihren Stoßkanten bearbeiteten Bleche während des Schweißvorgangs zusammenhalten. Die zu schweißende Naht ist in mehrere Abschnitte unterteilt und wird gleichzeitig von den verschiedenen, mit Abstand hintereinander angeordneten Laser-Schweißköpfen bearbeitet. Durch dieses gleichzeitige Bearbeiten mehrerer Abschnitte wird die für die Schweißung einer langen Naht benötigte Schweißzeit entsprechend der Anzahl der Schweißköpfe verkürzt. Um die einzelnen Schweißköpfe exakt auf die zu schweißende Naht mittels Stellmitteln auszurichten, ist jedem Schweißkopf eine Nahtverfolgung zugeordnet, mit der der Stumpfstoß abgetastet wird.

Eine andere bekannte Vorrichtung zum Herstellen von Tailored Blanks(EP 1 166 949 B1) weist ebenfalls einen Werkstückträger für die im Stumpfstoß zu fügenden Bleche auf. Der Werkstückträger besteht aus zwei Tischteilen, von denen der eine in Richtung des anderen verstellbar ist. Die beiden Tischteile dienen dazu, jeweils ein Blech zu halten, das an einer Kante mittels einer kombinierten Laser-Schneid- und Schweißvorrichtung beschnitten wird. Bei diesem Beschneiden wird der kombinierte Laser-Schneid- und Schweißkopf von numerisch gesteuerten Stellmitteln in Bezug auf eine Referenzlinie geführt. Nachdem auf diese Art und Weise nacheinander beide Schneidkanten hergestellt sind, wird der bewegliche Tischteil des Werkstückträgers mit dem von ihm gehaltenen Blech in Richtung des vom anderen fixierten Tischteils des Werkzeugträgers gehaltenen Blech verfahren, so dass die Schnittkanten aneinander stoßen. Dann verfährt der kombinierte Schneid- und Schweißkopf längs des Stumpfstoßes und schweißt die beiden Bleche zusammen.

Ferner ist eine Vorrichtung zum Herstellen einer Schweißnaht an zwei miteinander zu verbindenden Enden zweier Blechbänder bekannt (EP 438 609 B1) bei der für das Schneiden der beiden Enden individuelle Laser-Schweißköpfe vorgesehen sind. Nach dem Beschneiden können die beiden von einzelnen Werkstückträgern gehaltenen Enden stumpf zusammengestoßen werden und mittels eines Laser-Schweißkopfes miteinander verschweißt werden.

Schließlich ist aus der JP 60 121089 A eine Vorrichtung zum kombinierten Laserstrahlschneiden und -schweißen von Stahlplatten bekannt, bei der zwei Laserstrahl-Schneid- und Schweißköpfe von einem gemeinsamen Schwenkarm getragen sind. Die Vorrichtung ermöglicht ein exakt simultanes Schneiden von miteinander zu einem Tailored Blank zu fügenden Blechabschnitten. Dies wird dadurch erreicht, dass der Schwenkarm fluchtend zu den beiden Blechabschnitten ausgerichtet wird, so dass die beiden Laserstrahl-Schneid-und Schweißköpfe exakt auf einer Höhe befindlich parallele Schnittkanten erzeugen können. Beim anschließenden Drehen des Schwenkarms um 90° kann sodann die Schweißnaht abschnittsweise erzeugt werden, so dass die für das Schweißen erforderliche Zeit halbiert ist. Allerdings stößt die Vorrichtung bzw. das mit dieser Vorrichtung ausgeführte Verfahren im Falle kompliziert geformter, nichtlinearer Schweißnähte schnell an ihre/seine Grenzen.

Der Erfindung liegt die Aufgabe zugrunde, eine Vorrichtung und ein Verfahren zum Herstellen von Tailored Blanks zu entwickeln, mit der bei vergleichsweise geringem vorrichtungstechnischem Aufwand Tailored Blanks mit hoher Produktivität hergestellt werden können. Dabei soll es möglich sein, nicht nur lineare Schweißnähte, sondern auch nichtlineare und versetzte Schweißnähte herzustellen.

Diese Aufgabe wird mit einer Vorrichtung gemäß Anspruch 1 gelöst.

Mit der erfindungsgemäßen Vorrichtung werden simultan die im Stumpfstoß miteinander zu fügenden Bleche an ihren Kanten durch Beschneiden für die Schweißung vorbereitet. Damit ist in jedem Fall eine erhebliche Produktivitätssteigerung gegenüber dem Einsatz der beschriebenen bekannten Vorrichtungen verbunden. Beim Beschneiden der Bleche braucht die Vorrichtung nur einmal längs der zu beschneidenden Kanten der Bleche verfahren zu werden. Beim Schweißen wird die Schweißnaht in einzelne Abschnitte aufgeteilt, was durch Verkürzung der Schweißzeit ebenfalls zu einer Produktivitätssteigerung führt. Da die kombinierten Schweiß-und Schneidköpfe in jedem Fall eigene Stellmittel haben, lassen sich neben linearen Schweißnähten auch gegeneinander versetzte Schweißnähte und kurvig verlaufende Schweißnähte herstellen.

Vorrichtungstechnisch können nach Ausgestaltungen der Erfindung mit unabhängigen Armen zur Einstellung der Schneid-und Schweißköpfe auf die zu schneidenden Kanten bzw. auf den Stumpfstoß die Arme verschwenkbar sein und/oder jeder kombinierte Schneid- und Schweißkopf auf seinem Arm verstellbar sein.

Für eine hohe Produktivität der Vorrichtung ist es günstig, wenn auf der den Schneid- und Schweißköpfen abgewandten Seite der zu fügenden Bleche Mittel für die Schneid- und Schweißabfallbeseitigung vorgesehen sind, die simultan mit den Schneid- und Schweißköpfen verfahrbar sind.

Die Erfindung betrifft ferner ein Verfahren zum Herstellen von Tailored Blanks gemäβ Anspruch 7.

Im Falle des Schutzgasschweißens kann die Vorrichtung auf der den Schneid- und Schweißköpfen abgewandten Seite eine Schutzgaszuführung aufweisen, die simultan mit den Schneid-und Schweißköpfen verfahrbar ist.

Im Folgenden wird die Erfindung anhand einer Ausführungsbeispiele darstellenden Zeichnung näher erläutert, wobei die Darstellungen stark schematisiert sind. Im Einzelnen zeigen:
- Fig. 1: eine Vorrichtung zum Herstellen von Tailored Blanks mit linearer Schweißnaht in verschiedenen Phasen der Herstellung in isometrischer Darstellung, die nicht Gegenstand der Erfindung darstellt,
- Fig. 2: eine erfindungsgemäße Vorrichtung zum Herstellen von Tailored Blanks mit linearer Schweißnaht in verschiedenen Phasen der Herstellung in isometrischer Darstellung,
- Fig. 3: die Vorrichtung gemäß Fig. 2 zum Herstellen von Tailored Blanks mit nichtlinearer Schweißnaht in verschiedenen Phasen der Herstellung in isometrischer Darstellung,
- Fig. 4: die Vorrichtung gemäß Fig. 3 mit zusätzlichen Mitteln zur Schneid- und Schweißabfallbeseitigung in isometrischer Darstellung,
- Fig. 5: ein Tailored Blank mit einer linearen durchgehenden Schweißnaht,
- Fig. 6: drei Tailored Blanks mit fluchtenden linearen Schweißnähten,
- Fig. 7: ein Tailored Blank mit linearen zueinander versetzten Schweißnähten und
- Fig. 8: ein Tailored Blank mit einer nichtlinearen Schweißnaht.

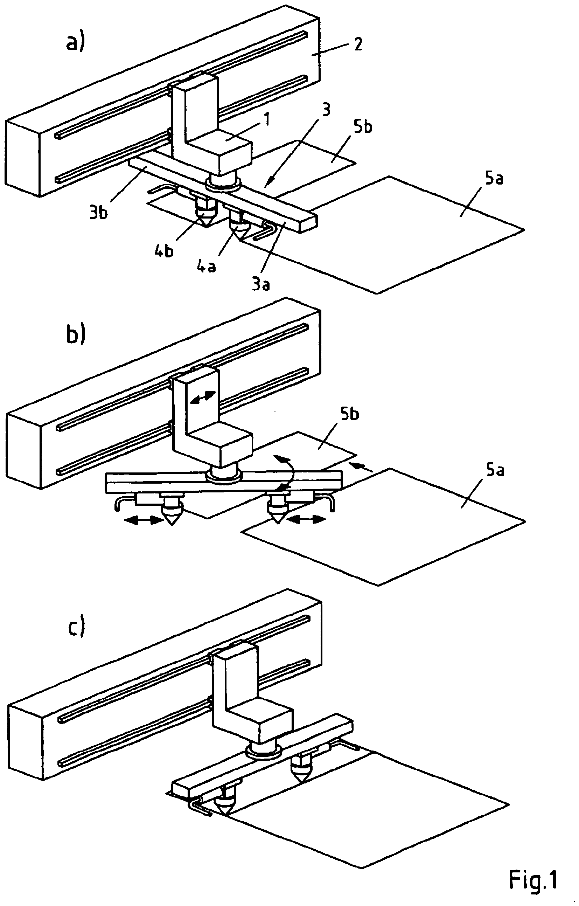

Die Vorrichtung gemäß Fig. 1 weist eine Vorschubvorrichtung 1 in Form eines Schlittens auf, die von einer Führungsschiene 2 getragen ist, an der sie linear verfahrbar ist. Die Vorschubvorrichtung 1 trägt ihrerseits zwei zu einem Doppelarm 3 zusammengefasste Schwenkarme 3a, 3b. Jeder Schwenkarm 3a, 3b trägt einen kombinierten Laser-Schneid- und Schweißkopf 4a, 4b, wie er an sich bekannt ist (EP 1 166 949 B1). Die Schneid- und Schweißköpfe 4a, 4b sind längs ihrer Schwenkarme 3a, 3b verstellbar. Die lineare Verstellbarkeit der Vorschubvorrichtung 1 und die der Schneid- und Schweißköpfe 4a, 4b auf den Schwenkarmen 3a, 3b sowie die Verschwenkbarkeit des Doppelarms 3 ist durch die Pfeile gekennzeichnet, womit gleichzeitig auch abstrahiert die Stellmittel dargestellt sind.

Unterhalb der Vorschubvorrichtung 1 mit dem Doppelarm 3 und den Schneid- und Schweißköpfen 4a, 4b ist ein in der Zeichnung nicht dargestellter, aus zwei aufeinander zu bewegbaren Tischteilen bestehender werkstückträger für zwei zu einem Tailored Blank zu fügende Bleche 5a, 5b vorgesehen. Solche Werkstückträger sind ebenfalls an sich bekannt (EP 1 166 949 B1; EP 0 522 811 B1). Der Werkstückträger ist in der Lage, die beiden Bleche 5a, 5b während der Bearbeitung zu halten und sie zur Bildung des Stumpfstoßes zusammenzuführen.

In der ersten Phase a) der Herstellung eines Tailored Blanks werden die beiden Bleche 5a, 5b auf Abstand zueinander von den Tischteilen des Werkstückträgers gehalten. Die beiden Schneid- und Schweißköpfe 4a, 4b sind auf Schneiden eingestellt. Beim Verfahren der Vorschubvorrichtung 1 längs der Bleche 5a, 5b werden parallele Schnittkanten erzeugt.

In der nächsten Phase b) werden die beiden geschnittenen Bleche 5a, 5b durch den Werkstückträger zusammengeführt, bis dass sie einen Stumpfstoß bilden. Dafür können beide Bleche 5a, 5b bewegt werden oder aber es wird nur ein Blech 5a bewegt, wie dargestellt ist.

Zur Vorbereitung des Schweißens wird in der Phase c) der Doppelarm 3 verschwenkt, so dass die beiden Schneid- und Schweißköpfe 4a, 4b fluchtend hintereinander und ausgerichtet auf den Stumpfstoß liegen. In der Regel wird ihr Abstand vergrößert, so dass nacheinander einzelne lange Abschnitte der herzustellenden Schweißnaht simultan geschweißt werden können.

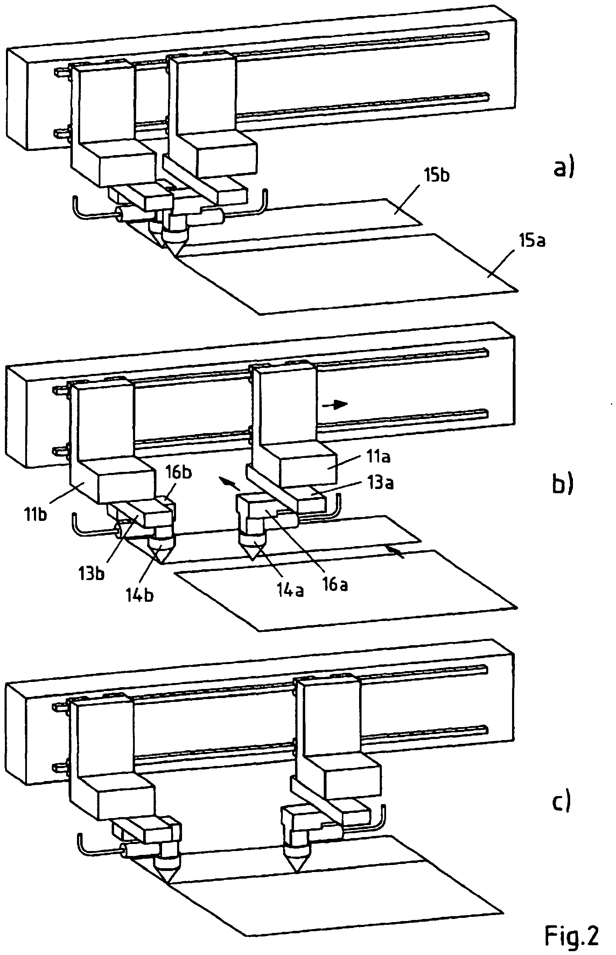

In Fig. 2 ist nun eine erfindungsgemäße Vorrichtung zum Herstellen von Tailored Blanks dargestellt. Die Vorrichtung umfasst wiederum eine Führungsschiene 2 sowie von individuellen Armen 13a, 13b getragene kombinierte Schneid-und Schweißköpfe 14a, 14b, wobei die Arme 13a, 13b ihrerseits von individuellen Einheiten 11a, 11b der Vorschubvorrichtung getragen sind. Die Schneid- und Schweißköpfe 14a, 14b werden dabei nicht unmittelbar von den Armen 13a, 13b sondern von Auslegern 16a, 16b getragen. Mit diesen Auslegern 16a, 16b sind sie längs der Arme 13a, 13b verstellbar, so dass sie beispielsweise eine Stellung unmittelbar nebeneinander einnehmen, aber auch auf eine Linie verstellt werden können.

In der ersten Phase a) der Herstellung eines Tailored Blanks werden die beiden Bleche 15a, 15b auf Abstand zueinander von den Tischteilen des (nicht im einzelnen dargestellten) Werkstückträgers gehalten. Die beiden Schneid- und Schweißköpfe 14a, 14b sind auf Schneiden eingestellt. Beim Verfahren der unabhängigen Einheiten 11a, 11b der Vorschubvorrichtung längs der Bleche 5a, 5b werden parallele Schnittkanten erzeugt.

In der nächsten Phase b) werden die beiden geschnittenen Bleche 15a, 15b durch den Werkstückträger zusammengeführt, bis dass sie einen Stumpfstoß bilden. Dafür können beide Bleche 15a, 15b bewegt werden oder aber es wird nur ein Blech 15a bewegt, wie in Fig. 2b) dargestellt.

Zur Vorbereitung des Schweißens werden in der Phase c) die von den Auslegern 16a, 16b getragenen beiden Schneid- und Schweißköpfe 14a, 14b längs der Arme 13a, 13b derart verstellt, dass die beiden Schneid- und Schweißköpfe 14a, 14b fluchtend hintereinander und ausgerichtet auf den Stumpfstoß liegen. In der Regel wird ihr Abstand vergrößert, so dass nacheinander einzelne lange Abschnitte der herzustellenden Schweißnaht simultan geschweißt werden können.

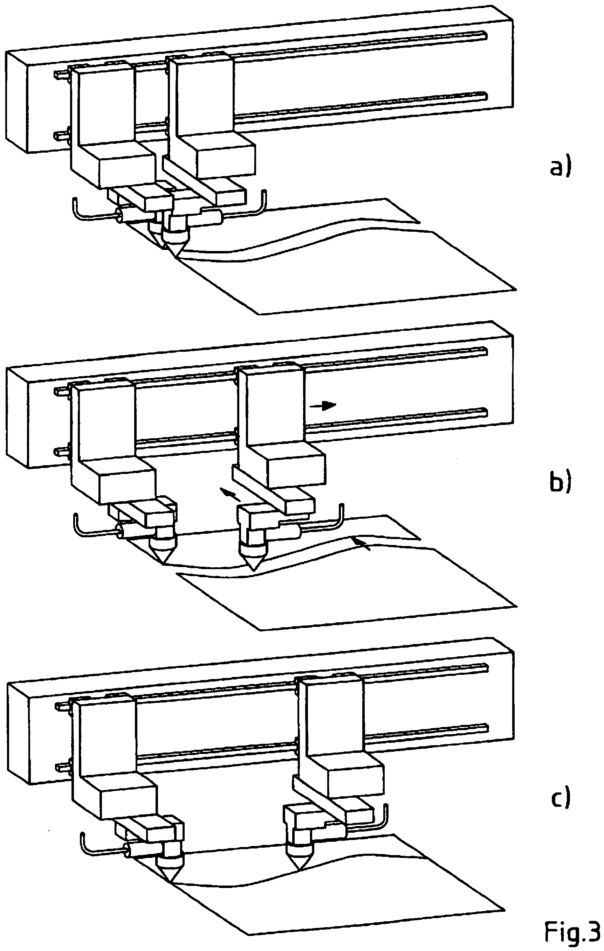

Die individuelle Einstellung der Schneid- und Schweißköpfe 14a, 14b mittels der an den Armen 13a, 13b verfahrbaren Ausleger 16a, 16b ermöglicht es auch, eine nichtlineare Schweißnaht, wie sie für das Ausführungsbeispiel der Fig. 3 dargestellt ist, herzustellen.

Im Rahmen der Erfindung gemäß dem Ausführungsbeispiel der Fig.2 lässt sich die individuelle Ausrichtung der Schneid-und Schweißköpfe 14a, 14b statt durch lineare Verstellung auch durch Verschwenkung der Arme 13a, 13b und/oder der Ausleger 16a, 16b erreichen.

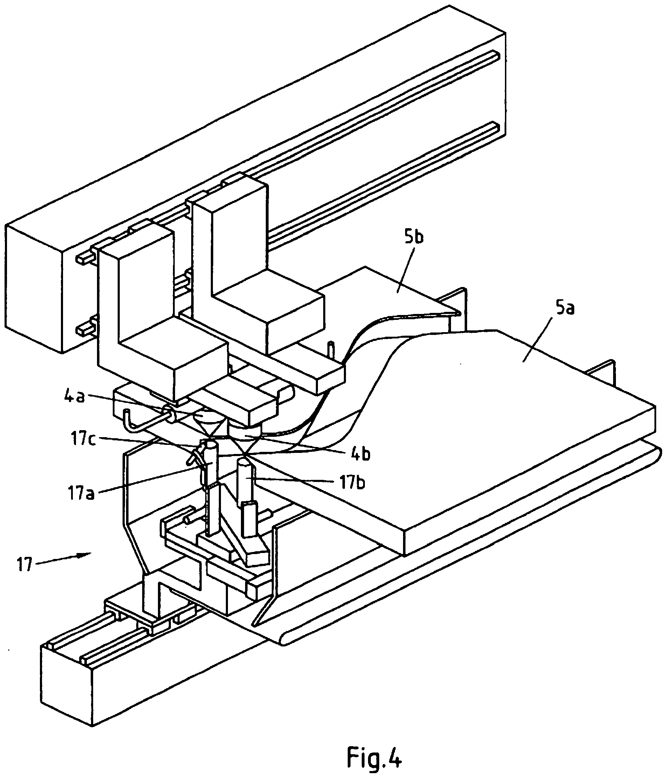

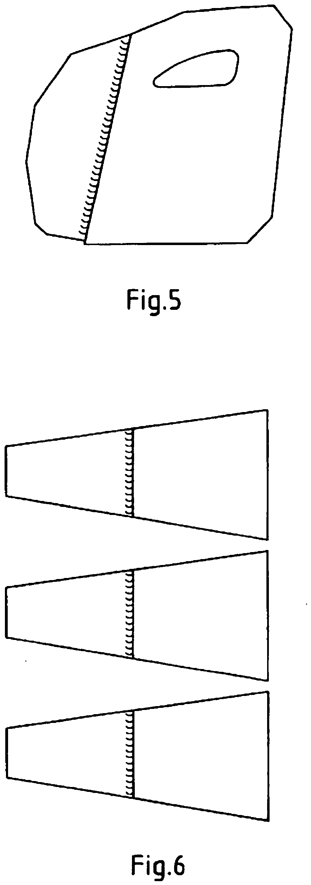

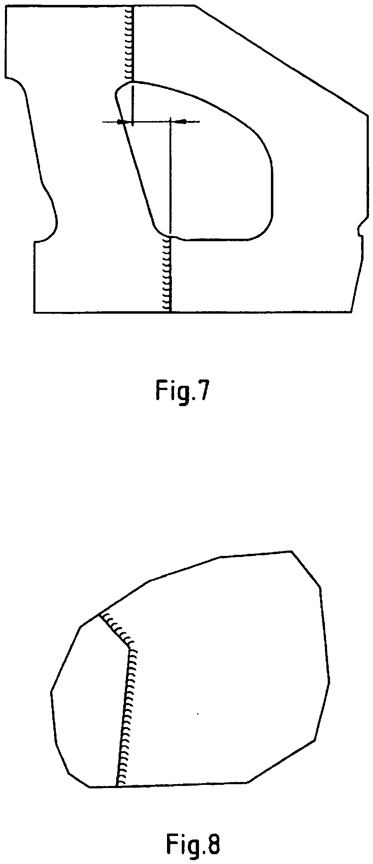

Mit der Vorrichtung zum Herstellen von Tailored Blanks nach Fig. 2 und 3 ist es möglich, lineare und nichtlineare Schweißnähte sowie gegeneinander versetzte Schweißnähte, wie sie in den Fig. 4 bis 7 dargestellt sind, herzustellen.

Im Rahmen der Erfindung ist es auch möglich, mit den Schneid-und Schweißköpfen 14a, 14b Mittel 17 für die Schneid- und Schweißabfallbeseitigung zu kombinieren. Beim Ausführungsbeispiel der Fig. 4 sind dafür mit den Schneid-und Schweißköpfen 14a, 14b simultan verfahrbare, insbesondere saugende Sammler 17a, 17b unterhalb der Bleche 15a, 15b vorgesehen. Der konstruktive Aufbau der Mittel der Einstellung und des Vorschubes entspricht im Wesentlichen dem der Schneid- und Schweißköpfe 14a, 14b. Darüber hinaus kann jeder Sammler 17a, 17b mit einer Blasdüse einer Schutzgaszuführung 17c ausgestattet sein.

## Patentansprüche

1. Vorrichtung zum Herstellen von Tailored Blanks mit einem Werkstückträger für die im Stumpfstoß durch Schweißen zum Tailored Blank zu fügenden Bleche (15a, 15b) und mit mehreren über dem Werkstückträger und längs der zu schweißenden Stumpfstoßschweißnaht hintereinander angeordneten und mit einer Vorschubvorrichtung (11a, 11b) in einer Vorschubrichtung verfahrbaren Laser-Schweißköpfen (14a, 14b), die jeweils mit Stellmitteln auf die Naht ausrichtbar sind,
**dadurch gekennzeichnet, dass**
mindestens zwei kombinierte Laser-Schneid- und Schweißköpfe (14a, 14b) von Auslegern (16a, 16b) getragen sind, die von mindestens zwei unabhängigen Armen (13a, 13b) getragen sind, die jeweils unabhängigen Einheiten (11a, 11b) der Vorschubvorrichtung zugeordnet sind, wobei die Ausleger (16a, 16b) an den Armen (13a, 13b) verfahrbar ausgebildet sind, und dass mit den Stellmitteln sowohl die Abstände der Einheiten (11a, 11b) in Richtung des Stumpfstoßes als auch die Abstände der Schneid- und Schweißköpfe (14a, 14b) in Querrichtung zum Stumpfstoß einstellbar sind, wobei die Laser-Schneid- und Schweißköpfe (14a, 14b) von den Auslegern (16a, 16b) zu den Armen (13a, 13b) in Vorschubrichtung derart versetzt getragen sind, dass sie zur Erzeugung paralleler Schnittkanten relativ zur Vorschubrichtung eine Stellung unmittelbar nebeneinander einnehmen können oder zur Vorbereitung des Schweißens auf eine Linie in Vorschubrichtung verstellt werden können.

2. Vorrichtung nach Anspruch 1,
**dadurch gekennzeichnet, dass**
die Schneid- und Schweißköpfe 14a, 14b durch Verschwenkung der Arme 13a, 13b und/oder der Ausleger 16a, 16b individuell ausrichtbar sind.

3. Vorrichtung nach Anspruch 1 oder 2,
**dadurch gekennzeichnet, dass**
die unabhängigen Arme (13a, 13b) auf ihren Einheiten (11a, 11b) gegenüber dem Stumpfstoß verschwenkbar sind.

4. Vorrichtung nach einem der Ansprüche 1 bis 3,
**dadurch gekennzeichnet, dass**
jeder kombinierte Laser-Schneid- und Schweißkopf (14a, 14b) in Richtung seines Arms (13a, 13b) verstellbar ist.

5. Vorrichtung nach einem der Ansprüche 1 bis 4,
**dadurch gekennzeichnet, dass**
dass auf der den Schneid- und Schweißköpfen (14a, 14b) abgewandten Seite der zu fügenden Bleche (15a, 15b) Mittel (17) für die Schneid- und Schweißabfallbeseitigung vorgesehen sind, die simultan mit den Schneid- und Schweißköpfen (4a, 4b) verfahrbar sind.

6. Vorrichtung nach einem der Ansprüche 1 bis 5,
**dadurch gekennzeichnet, dass** dass
auf der den Schneid- und Schweißköpfen (14a, 14b) abgewandten Seite der zu fügenden Bleche (15a, 15b) eine Schutzgaszuführung (17c) vorgesehen ist, die simultan mit den Schneid- und Schweißköpfen (4a, 4b) verfahrbar ist.

7. Verfahren zum Herstellen von Tailored Blanks aus im Stumpfstoß durch Schweißen zu fügenden Blechen (15a, 15b) insbesondere mit einer Vorrichtung nach Anspruch 1,
**dadurch gekennzeichnet, dass**
mindestens zwei kombinierte Laser-Schneid- und Schweißköpfe (14a, 14b) von Auslegern (16a, 16b) getragen werden, die von mindestens zwei unabhängigen, jeweils unabhängigen Einheiten (11a, 11b) der Vorschubvorrichtung zugeordneten Armen (13a, 13b) getragen werden, wobei die Laser-Schneid- und Schweißköpfe (14a, 14b) von den Auslegern (16a, 16b) zu den Armen (13a, 13b) in einer Vorschubrichtung der unabhängigen Einheiten (11a, 11b) derart versetzt getragen werden, dass die mindestens zwei kombinierten Laser-Schneid- und Schweißköpfe (14a, 14b) simultan und in der Vorschubrichtung unmittelbar nebeneinander längs der für den Stumpfstoß herzustellenden Kanten der von einem Werkstückträger gehaltenen Bleche verfahren werden und dabei die Kanten beschneiden und dass dann nach dem Zusammenführen der Bleche (15a, 15b) zum Stumpfstoß und Halten der Bleche (15a, 15b) durch den Werkstückträger die beiden kombinierten Laser-Schneid- und Schweißköpfe (14a, 14b) auf eine Linie verstellt und fluchtend hintereinander simultan längs den hergestellten, den Stumpfstoß bildenden Kanten der vom Werkstückträger gehaltenen Bleche (15a, 15b) verfahren werden und dabei die Schweißnaht in verschiedenen, aufeinanderfolgenden Abschnitten herstellen.

## Claims

1. A device for producing tailored blanks with a workpiece carrier for the sheets (15a, 15b) that are to be joined into the tailored blank in the butt joint by welding and with a plurality of laser welding heads (14a, 14b) which are arranged one behind the other over the workpiece carrier and along the butt joint seam to be welded and can be moved with an advancing device (11a, 11b) in an advance direction, wherein the heads can each be aligned with the joint using positioning means,
**characterised in that**
at least two combined laser cutting and welding heads (14a, 14b) are carried by extension arms (16a, 16b), which are carried by at least two independent arms (13a, 13b), which are each associated with independent units (11a, 11b) of the advancing device, wherein the extension arms (16a, 16b) are designed to be movable on the arms (13a, 13b), and **in that** the positioning means can adjust the distances of the units (11a, 11b) in the direction of the butt joint and also the distances of the cutting and welding heads (14a, 14b) in the transverse direction to the butt joint, wherein the laser cutting and welding heads (14a, 14b) are carried by the extension arms (16a, 16b) having an offset with respect to the arms (13a, 13b) in advance direction, so that they can assume a position directly beside one another to produce parallel cut edges in advance direction or they can be adjusted onto a line in advance direction to prepare welding.

2. The device according to claim 1,
**characterised in that**
the cutting and welding heads (14a, 14b) can be aligned individually by swivelling the arms (13a, 13b) and/or the extension arms (16a, 16b).

3. The device according to claim 1 or 2,
**characterised in that**
the independent arms (13a, 13b) can be swivelled on their units (11a, 11b) with respect to the butt joint.

4. The device according to any one of claims 1 to 3,
**characterised in that**
each combined laser cutting and welding head (14a, 14b) can be adjusted in the direction of its arm (13a, 13b).

5. The device according to any one of claims 1 to 4,
**characterised in that**,
on the side of the sheets (15a, 15b) to be joined facing away from the cutting and welding heads (14a, 14b), means (17) are provided for the removal of cutting and welding waste, said means being able to move simultaneously with the cutting and welding heads (4a, 4b).

6. The device according to any one of claims 1 to 5,
**characterised in that**,
on the side of the sheets (15a, 15b) to be joined facing away from the cutting and welding heads (14a, 14b), a protective gas supply (17c) is provided, which can move simultaneously with the cutting and welding heads (4a, 4b).

7. A method for producing tailored blanks from sheets (15a, 15b) to be joined by welding in the butt joint, in particular using a device according to claim 1,
**characterised in that**
at least two combined laser cutting and welding heads (14a, 14b) are carried by extension arms (16a, 16b), which are carried by at least two independent arms (13a, 13b) associated with independent units (11a, 11b) of the advancing device, wherein the laser cutting and welding heads (14a, 14b) are carried by the extension arms (16a, 16b) having an offset with respect to the arms (13a, 13b) in advance direction of the independent units (11a, 11b), so that the at least two combined laser cutting and welding heads (14a, 14b) are simultaneously moved in a position directly beside one another in advance direction along the edges of the sheets held by a workpiece carrier, which edges are to be produced for the butt joint, and thereby cut the edges, and **in that**, after the bringing-together of the sheets (15a, 15b) for the butt joint and the holding of the sheets (15a, 15b) by the workpiece carrier, the two combined laser cutting and welding heads (14a, 14b)are adjusted onto a line and are then moved simultaneously in a position aligned one behind the other along the produced edges of the sheets (15a, 15b) held by the workpiece carrier, which edges form the butt joint, and thereby produce the weld seam in different successive segments.

## Revendications

1. Dispositif pour créer des ébauches sur mesure, comprenant un support de pièce pour les tôles (15a, 15b) à ajouter à l'ébauche sur mesure en assemblage bout-à-bout par soudage, et plusieurs têtes à souder laser (14a, 14b) disposées au-dessus du support de pièce et l'une derrière l'autre longitudinalement au cordon de soudure d'assemblage bout-à-bout à souder et pouvant être avancées dans un sens d'avancement avec un dispositif d'avancement (11a, 11b), lesquelles peuvent être alignées respectivement sur le cordon avec des moyens de réglage, **caractérisé en ce qu'**au moins deux têtes à souder et à découper laser combinées (14a, 14b) sont supportées par des potences (16a, 16b) qui sont supportées par au moins deux bras indépendants (13a, 13b) attribués chacun à des unités indépendantes (11a, 11b) du dispositif d'avancement, sachant que les potences (16a, 16b) sont formées en pouvant avancer sur les bras (13a, 13b), et **en ce qu'**avec les moyens de réglage, tant les écarts des unités (11a, 11b) en direction de l'assemblage bout-à-bout que les écarts des têtes à souder et à découper (14a, 14b) sont réglables dans le sens transversal par rapport à l'assemblage bout-à-bout, sachant que les têtes à souder et à découper laser (14a, 14b) sont supportées par les potences (16a, 16b) en étant ainsi décalées par rapport aux bras (13a, 13b) dans le sens d'avancement qu'elles peuvent adopter une position directement l'une à côté de l'autre par rapport au sens d'avancement, pour produire des arêtes de coupe parallèles ou peuvent être déplacées sur une ligne dans le sens d'avancement pour préparer la soudure.

2. Dispositif selon la revendication 1, **caractérisé en ce que** les têtes à souder et à découper laser (14a, 14b) peuvent être alignées individuellement par un basculement des bras (13a, 13b) et/ou des potences (16a, 16b).

3. Dispositif selon la revendication 1 ou 2, **caractérisé en ce que** les bras indépendants (13a, 13b) peuvent basculer par rapport à l'assemblage bout-à-bout sur leurs unités (11a, 11b).

4. Dispositif selon l'une des revendications 1 à 3, **caractérisé en ce que** chaque tête à souder et à découper laser combinée (14a, 14b) peut être déplacée en direction de son bras (13a, 13b).

5. Dispositif selon l'une des revendications 1 à 4, **caractérisé en ce que** des moyens pour éliminer les déchets de coupe et de soudure qui peuvent avancer simultanément avec les têtes à souder et à découper (14a, 14b) sont prévus sur le côté des tôles à ajouter (15a, 15b) détourné des têtes à souder et à découper (14a, 14b).

6. Dispositif selon l'une des revendications 1 à 5, **caractérisé en ce qu'**une alimentation de gaz de protection (17c) qui peut avancer simultanément avec les têtes à souder et à découper (14a, 14b) est prévue sur le côté des tôles à ajouter (15a, 15b) détourné des têtes à souder et à découper (14a, 14b).

7. Procédé pour créer des ébauches sur mesure à partir de tôles (15a, 15b) à ajouter en assemblage bout-à-bout par soudage, comprenant en particulier un dispositif selon la revendication 1, **caractérisé en ce qu'**au moins deux têtes à souder et à découper laser combinées (14a, 14b) sont supportées par des potences (16a, 16b) qui sont portées par au moins deux bras indépendants (13a, 13b) attribués chacun à des unités indépendantes (11a, 11b) du dispositif d'avancement, sachant que les têtes à souder et à découper laser (14a, 14b) sont supportées par les potences (16a, 16b) en étant décalées par rapport aux bras (13a, 13b) dans un sens d'avancement des unités indépendantes (11a, 11b), que les aux moins deux têtes à souder et à découper laser combinées (14a, 14b) sont avancées simultanément et directement l'une à côté de l'autre dans le sens d'avancement le long des arêtes à créer des tôles tenues par un support de pièce, pour l'assemblage bout-à-bout, et coupent ainsi les arêtes, et qu'après la réunion des tôles (15a, 15b) pour l'assemblage bout-à-bout et le maintien des tôles (15a, 15b) par le support de pièce, les deux têtes à souder et à découper laser combinées (14a, 14b) sont déplacées sur une ligne et sont avancées simultanément en étant alignées l'une derrière l'autre le long des arêtes créées, formant l'assemblage bout-à-bout, des tôles (15a, 15b) tenues par le support de pièce et créent ainsi le cordon de soudure en différentes sections successives.
